**Europäisches Patentamt**

**European Patent Office**

**Office européen des brevets**

(11) Veröffentlichungsnummer: **0 151 957**

**A2**

## EUROPÄISCHE PATENTANMELDUNG

(21) Anmeldenummer: **85100499.4**

(22) Anmeldetag: **18.01.85**

(51) Int. Cl.⁴: **G 01 P 15/08**

(30) Priorität **25.01.84 SE 8400365**

(43) Veröffentlichungstag der Anmeldung:
**21.08.85 Patentblatt 85/34**

(84) Benannte Vertragsstaaten:
**DE FR GB**

(71) Anmelder **ASEA AB**

**S-721 83 Västeras(SE)**

(72) Erfinder: **Hök, Bertil**
**Sportfiskargatan 53**
**S-723 48 Västeras(SE)**

(72) Erfinder: **Jonsson, Lars, Dipl.-Ing.**
**Malmabergsgatan 79 F**
**S-723 35 Västeras(SE)**

(74) Vertreter: **Boecker, Joachim, Dr.-Ing.**
**Rathenauplatz 2-8**
**D-6000 Frankfurt a.M. 1(DE)**

(54) beschleunigungsmesser.

(57) Beschleunigungsmesser mit optischem oder elektrischem Ausgangssignal, welches die Beschleunigung eines Sensorkörpers (1) anzeigt, mit mindestens einem Massenelement (2) und mindestens einem elastischen Element (3), das an den Sensorkörper (1) angeschlossen ist, wobei das optische oder elektrische Ausgangssignal durch relative Bewegung des Massenelements (2) oder eines Teils desselben relativ zum Sensorkörper oder durch innere mechanische Dehnungen im Massenelement (2) und/oder des elastischen Elementes (3) erzeugt wird. Gemäß der Erfindung enthält der Beschleunigungsmesser außerdem ein Dämpfungselement, das aus einer gasgefüllten Kavitation (4) besteht, die von zwei im wesentlichen parallelen Flächen (5, 6) gebildet wird, von denen die eine Fläche von dem Massenelement (2) und die andere Fläche von dem Sensorkörper oder einem in ebener Verbindung mit dem Sensorkörper stehenden Teil gebildet wird wobei die Form, die Größe und der Abstand der Flächen (5, 6) voneinander so bemessen sind, daß die Grundeigenschwingung des Massenelementes (2) und der elastischen Verbindung (3) im wesentlichen kritisch gedämpft wird.

*FIG. 1*

5.12.1984
21 523 PE

**0151957**

ASEA AB
S-721 83 Västeras/Schweden

Beschleunigungsmesser

Die vorliegende Erfindung betrifft einen Beschleunigungsmesser gemäß dem Oberbegriff des Anspruches 1.

Beschleunigungsmesser haben weite Anwendungsbereiche zur
Erfassung, Messung und Überwachung von Schwingungen in
Maschinen, Gebäuden, Fahrzeugen usw. Bei den Anwendungen
kann es sich entweder um feste Einrichtungen oder um
zufällige (intermittente) Messungen handeln. In beiden
Fällen möchte man eine geradlinige Frequenzcharakteristik
für den gesamten interessierenden Frequenzbereich haben. Die
intermittente Anwendungsart stellt darüber hinaus hohe
Ansprüche an die Handhabbarkeit und die Stoßfestigkeit des
äußeren Einwirkungen ausgesetzten Sensors.

Beschleunigungsmesser sind normalerweise aus einem oder
mehreren Massenelementen aufgebaut, die elastisch in einem
Sensorkörper aufgehängt oder eingespannt sind. Die Beschleunigung wird entweder durch eine Relativbewegung zwischen dem
Massenelement und dem Einspannpunkt des Federelementes oder
in Form einer mechanischen Dehnung in einem elastisch
veformbaren Körper erfaßt. Beide dieser Größen können durch
eine Reihe verschiedener physikalischer Erscheinungen in
elektrische oder optische Signale umgeformt werden, wie beispielsweise durch kapazitive Lagebestimmung, piezoelektrische oder piezoresistive Dehnungsmessung beziehungsweise
geometrisch optische oder interferometrische Lagebestimmung
sowie fotoelastische Dehnungsmessung.

25.12.1984
21 523 PE
0151957

Das vorstehend genannte mechanische Massen-Federsystem zeigt stets mechanische Resonanzerscheinungen, welche die dynamischen Einsatzmöglichkeiten des Systems begrenzen. Normalerweise wird nur der Frequenzbereich unterhalb der Grundeigenfrequenz ausgenutzt. Für eine optimale Amplituden- und Phasencharakteristik muß diese Resonanzschwingung dann durch die Einführung eines Dämpfungselementes gedämpft werden. Eine Lösung dieses Problems besteht darin, daß durch Anbringung eines viskosemechanischen Widerstandselementes, das normalerweise zur Erreichung einer hohen Viskosität auf einer Flüssigkeit basiert. Hierdurch entstehen jedoch Einkapselungsprobleme, und ferner besteht die Gefahr einer Blasenbildung in Folge von Temperatur- und Druckschwankungen, was eine unzuverlässige Arbeitsweise des Dämpfungselementes zur Folge hat. Eine völlig andere Lösung des Problems besteht in der Verwendung elektronischer Filter, eventuell sogar adaptiver Filter, deren Parameter von dem Frequenzinhalt des Signals gesteuert werden können. Bei dieser Lösung bleibt jedoch ein anderes wichtiges Problem ungelöst, nämlich die erforderliche Schlag- und Stoßfestigkeit des Sensors. Direkte Stöße gegen den Sensorkörper, beispielsweise beim Fallen auf eine harte Unterlage, verursachen infolge der großen Bandbreite der Anregung starke Resonanzschwingungen, wenn der Sensor nicht mechanisch gedämpft ist. Dies kann oft zu bleibenden Verformungen und Knickungen führen, die wiederum schwer erkennbare Meßfehler verursachen.

Der Erfindung liegt die Aufgabe zugrunde ein Beschleunigungsmesser der eingangs genannten Art zu entwickeln, bei dem eine wirksame Dämpfung der Grundeigenschwingung ohne die bei den bekannten Systemen vorhandene Nachteile erreicht wird.

25.12.1984
0151957

Zur Lösung dieser Aufgabe wird ein Beschleunigungsmesser gemäß dem Oberbegriff des Anspruches 1 vorgeschlagen, welches erfindungsgemäß die im kennzeichnenden Teil des Anspruches 1 genannten Merkmale hat.

Vorteilhafte Ausgestaltungen der Erfindung sind in den weiteren Ansprüchen genannt.

Die Erfindung besteht also in einem mechanischen Dämpfungselement mit solcher geometrischen Ausbildung, daß ein Gas, zum Beispiel Luft bei normalen Druck, als viskoses Medium verwendet werden kann. Die Kavitation kann einfach aus der zwischen zwei parallelen Flächen befindlichen Luft bestehen. Durch diese Dämpfung werden sämtliche oben genannten Nachteile der bekannten Beschleunigungsmesser beseitigt. Das Dämpfungselement kann in einer Reihe verschiedener Systeme und bei mehreren alternativen Meßverfahren zur Anwendung kommen, einschließlich integrierter Techniken, die sich für paralleles "batch-processing" eignen. Der Beschleunigungsmesser kann ein optisches oder elektrisches Ausgangssignal erzeugen, das auf geometrisch optischer oder interferometrischer Lichtmodulation, alternativ auf piezoelektrischer oder kapazitiver Signalumwandlung, basiert.

Anhand der in den Figuren gezeigten Ausführungsbeispiele soll die Erfindung näher erläutert werden. Es zeigen

Figur 1 ein erstes Ausführungsbeispiel eines Beschleunigungsmessers gemäß der Erfindung mit optischem Ausgangssignal,

Figur 2 eine Prinzipdarstellung zur Erläuterung der Arbeitsweise des Dämpfungselementes,

21 523 PE
0151957

Figur 3 ein zweites Ausführungsbeispiel eines Beschleunigungsmessers gemäß der Erfindung mit optischem Ausgangssignal,

Figur 4 und 5 zwei Ausführungsbeispiele von Beschleunigungsmessern gemäß der Erfindung mit elektrischem Ausgangssignal,

Figur 6 ein drittes Ausführungsbeispiel eines Beschleunigungsmessers gemäß der Erfindung mit optischem Ausgangssignal,

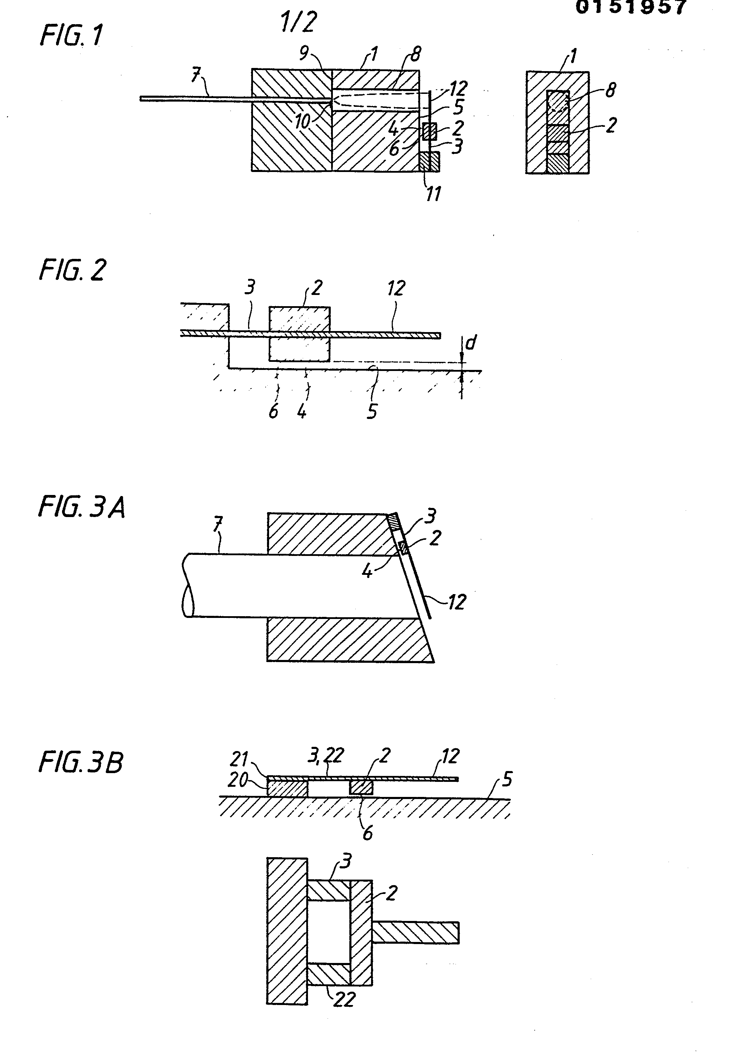

Figur 1 zeigt einen Sensor, der über eine optische Faser 7 mit optischer Anregungsenergie gespeist wird, wobei am Ende der Faser eine sogenannte GRIN-Linse 8 (Graded Index) sowohl an der Faser wie an einem Sensorkörper 1 starr anliegend, d.h. nicht federnd, montiert ist. Der Sensorkörper 1 ist aus fertigungstechnischen Gründen zweiteilig mit einer Teilungsebene 9 aufgebaut, in welcher die Faserendfläche liegt. In der Teilungsgebene 9 liegt auch eine dünne Scheibe 10 aus fotolumineszierendem Material, zum Beispiel einer Schichtstruktur aus $GaAs-Al_xGa_{1-x}As$, die unter anderem aus Gründen angeordnet ist, wie sie in der ET-A-38 10 4981.2 erläutert sind. Die Scheibe 10 ist so angeordnet, daß sie das durch die Faser 7 zugeführte Licht nur teilweise absorbiert und in Form Fotolumineszenz reemittiert. Das übrige von der Faser 7 herangeführte Licht, das an der Faserendfläche divergend ist, passiert die GRIN-Linse 8, durch die das Strahlenbündel parallelisiert wird. An dem Sensorkörper 1 ist ferner das eigentliche Sensorelement 12 angeordnet, das aus einem Massenelement und einem elastischen Element, zum Beispiel einer Feder, sowie einem Dämpfungselement 4 besteht. Das elastische Element besteht in dem Ausführungsbeispiel aus einer Blattfeder, die an ihrem einen Ende in einem Distanzelement 11 fest eingespannt

21 523 PE
0151957

ist. Das Dämpfungselement oder - wie es auch genannt wird -
die Kavitation kann von der zwischen den beiden
gegenüberliegenden Flächen vorhandenen Luft gebildet werden.
Das Massenelement 2 ist an der Blattfeder fest angebracht
und so geformt, daß zwei im wesentlichen parallele Flächen 5
und 6 zwischen dem Massenelement und dem Sensorkörper
gebildet werden. Ferner ist das Sensorelement 12 so
beschaffen, daß es die über die GRIN-Linse 8 einfallende
optische Energie gut reflektiert. Der Sensor arbeitet in
folgender Weise:

Wenn der Sensorkörper 1 eine Beschleunigung in Richtung der
Längsachse der optischen Faser 7 erfährt, kommt es aufgrund
der auf das Massenelement 2 wirkenden Trägheitskraft und der
dieser entgegenwirkenden Rückstellkraft des Federelementes 3
zu einer von der Größe der Beschleunigung abhängigen
Auslenkung der Fehlerelementes, d.h. zu einer relativen
Bewegung zwischen dem Sensorelement 12 und dem Sensorkörper
1. Dies bedeutet, daß der Einfallswinkel des aus der GRIN-
Linse 8 austretenden Lichtes auf die reflektierende Fläche
des elastischen Elementes 3 sich ändert, wodurch die
Lichtmenge verändert wird, die von dem Sensorelement 12 in
die Faser 7 zurückreflektiert wird. Die von dem Material der
Scheibe 10 ausgehende Fotolumineszenz liefert ein optisches
Bezugssignal, welches von dem Meßsignal unabhängig ist. Es
dient zur Kompensation eventueller optischer Verluste in der
Faser 7 oder in Faserverbindungen.

Figur 2 erläutert die Funktion des Dämpfungselementes 4
genauer. Das Massenelement 2 ist so ausgebildet, daß sich
eine gasgefüllte Kapitation zwischen zwei im wesentlichen
parallelen Flächen 5 und 6 bildet, von denen die eine Fläche
5 zu dem Sensorkörper und die andere Fläche 6 zu dem Massenelement 2 gehört. Wenn das Sensorelement 12 einschließlich
des Massenelementes und des elastischen Elements 3 eine
Schwingung ausführen, treten in der Kavitation 4 Druck-

25.12.1984
21 523 PE
0151957

schwankungen auf, die durch einen Gasstrom in die Kavitation hinein bzw. aus dieser heraus ausgeglichen werden müssen. Der Strömungswiderstand dieses Gasstromes und damit die Dämpfung sind von der Viskosität des Mediums (des Gases), dem Abstand zwischen den Flächen 5 und 6 sowie deren Größe und Form abhängig. Die Größe des Strömungswiderstandes bestimmt also die Dämpfung der mechanischen Resonanzschwingung des Sensorelementes 12. Durch eine theoretisch berechnete und/oder empirisch ermittelte Bemessung der Kavitation 4 können optimale Dämpfungseigenschaften erzielt werden. Dies geschieht durch eine sogenannte kritische Dämpfung gemäß einer bekannten Theorie für Systeme zweiter Ordnung und kann durch Messung der Frequenzcharakteristik des Beschleunigungsmessers auf einfache Weise ermittelt werden. Für den Fall eines fest eingespannten Trägers (zum Beispiel Blattfeder) mit rechteckigem Querschnitt und gleichmäßig verteilter Masse kann der folgende spezifische analytische Zusammenhang abgeleitet werden:

$$Q = \frac{h^2 d^3 (E\varrho)^{1/2}}{\eta \, \ell^2 b^2}$$

Dabei ist

q   der Q-Wert der Resonanz

h   die Dicke des Trägers

E   der Young Modul die Dichte

d   der Abstand zwischen den Flächen 5 und 6

$\eta$   die Viskosität des Gases

l   die Länge des Trägers

b   die Breite des Trägers.

Figur 3 zeigt eine abgewandelte Ausführungsform des faseroptischen Beschleunigungsmessers nach Figur 1, bei welcher das Sensorelement 12 als eine integrierte Struktur aufgebaut ist, die nach aus der Halbleitertechnologie bekannten Verfahren hergestellt ist. Das Sensorelement 12 ist aus einem monolithischen, einkristallinen Material hergestellt, wie zum Beispiel einer GaAs-$Al_xGa_{1-x}As$-Struktur, die ein GaAs-Substrat 20 mit Epitaxialschichten 21 aus GaAs und $Al_xGa_{1-x}As$ enthält. Durch Musterätzung nach bekannten fotolithographischen Verfahren kann eine geometrische Form entsprchend Figur 3b hergestellt werden. Das Massenelement 2 ist hier mit dem Stützelement 20 durch zwei elastische Elemente 3, 22 verbunden. Diese sind so plaziert, daß Bewegungen des Massenelementes 2 senkrecht zu der normalen Richtung verhindert werden. Ferner bewirkt die Plazierung des Massenelementes 2 nahe der Befestigung am Stützelement 20 eine mechanische Verstärkung der Bewegung des freien Endes des Sensorelementes 12 durch Hebelwirkung.

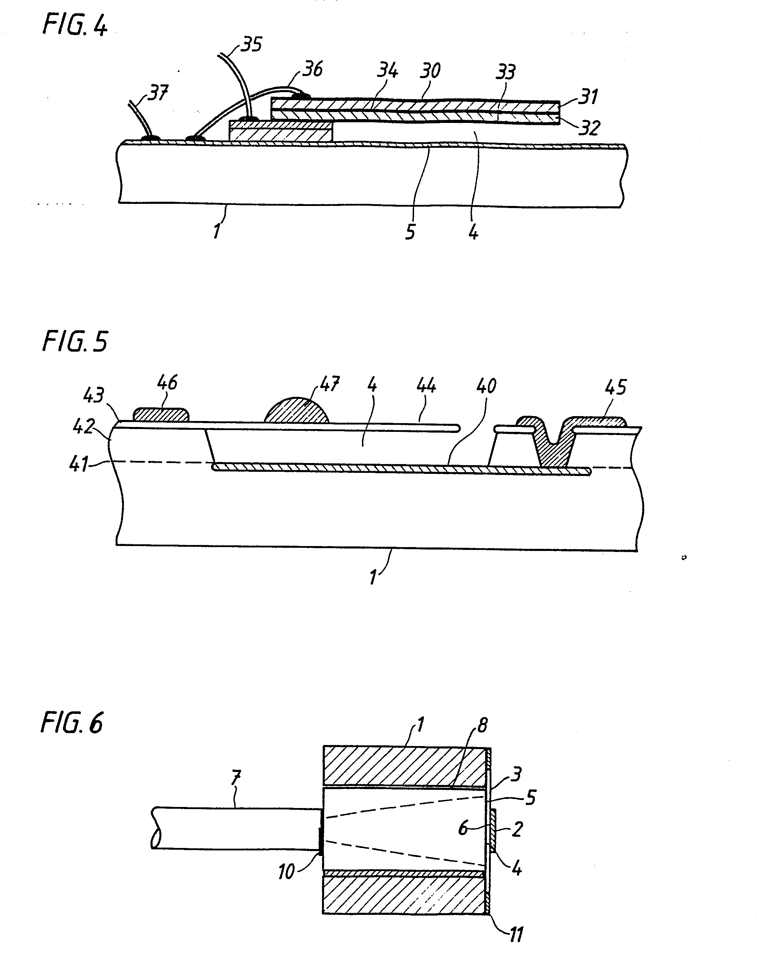

Figur 4 zeigt eine Ausführungsform eines Beschleunigungsmessers mit elektrischem Ausgangssignal. Der Sensor besteht in diesem Fall aus zwei piezoelektrischen Platten 31, 32, zum Beispiel $Pb(Zr_xTi_{1-x})O3$, die ein sog. bimorphes Element bilden, wobei die Platten 31 und 32 Metallschichten 30, 33, 34 sind und entgegengesetzte Polarität haben. Eine Biegung des genannten Elementes verursacht unmittelbar eine elektrische Ausgangsspannung zwischen den äußeren Schichten 30 und 33. Diese Ausgangsspannung kann über elektrische Leiter 35 bis 37 zu Verstärkern und Signalverarbeitungsgliedern geleitet werden. In dem gezeigten Ausführungsbeispiel bilden die piezoelektrischen Platten 31, 22 mit den Metallschichten 30, 33, 34 elastische Elemente mit gleichmäßig verteilter Masse. Das Dämpfungselement 4 wird durch Wahl der Form und der Abmessung der Platten 31, 32 sowie des Abstandes zwischen den Flächen 33 und 5 bestimmt. Das umgebende Gas bestimmt den Viskositätswert, wie dies anhand des Ausführungsbeispiels gemäß Figur 2 bereits beschrieben wurde.

25.12.1984
21 523 PE

0151957

Figur 5 zeigt einen elektrischen Beschleunigungsmesser in integrierter Ausführung. Der Sensorkörper 1 ist aus einkristallinem Silizium mit einem eindiffundierten Muster mit Bordotierung 40 hergestellt. Auf diesem Schichtniveau 41 ist weiteres Silizium 42 durch epitaxialen Zuwachs aufgetragen worden, wonach diese Fläche oxydiert wurde, wodurch eine dünne Schicht $SiO_2$ 43 mit guter Haftfähigkeit und guten mechanischen Eigenschaften geschaffen wurde. Diese Schicht wie auch die Epitaxialschicht 42 sind selektiv an den Stellen weggeätzt, an denen zuvor eine Bordiffusion stattfand. Die Technik hierfür ist bekannt (siehe zum Beispiel KE Petersen, Proc IEEE, Vol 70 (1982), S. 420-457). Durch dieses Verfahren kann somit das einseitig eingespannte Trägerelement 44 aus Siliziumdioxyd auf dem Siliziumsubstrat integriert werden.

Das Trägerelement 44 ist auf seiner Oberseite mit einer Metallschicht belegt, und eventuell auch mit einer konzentrierten Masse 47. Somit ist eine kapazitive Erfassung der Lage zwischen der Schicht 40 und dem Trägerelement 44 möglich, und die durch die kapazitive Messung erzeugten Signale können über Metallschichten 45, 46 zu Verstärkern geleitet werden, die vorzugsweise auf demselben Siliziumsubstrat integriert sind. Das Dämpfungselement 4 wird entsprechend der obigen Beschreibung zwischen der Fläche des Trägerelementes 44 und der Fläche 40 gebildet.

Figur 6 zeigt eine weitere Ausführungsform eines faseroptischen Beschleunigungsmessers, der eine sogenannte Fabry- Perot-Kavitation für interferometrische Lichtmodulation durch Beschleunigung ausnutzt. Der Aufbau ist in der äußeren Form dem in Figur 1 gezeigten sehr ähnlich. Der Unterschied besteht darin, daß die Flächen 5 und 6 halb reflektierend sind, beispielsweise durch dünne aufgedampfte Metallschichten. Wenn der Abstand zwischen den Flächen 5 und 6 die

25.12.1984
0151957

halbe Kohärenzlänge des durch die Faser 7 und die GRIN-Linse 8 herangeführten Lichtes unterschreitet, entsteht eine Indifferenz, was bedeutet, daß die Intensität des reflektierten Lichtes von sehr kleinen Änderungen des Flächenabstandes 5, 6 moduliert wird. Sensoren dieses Aufbaus haben eine sehr hohe Empfindlichkeit und Signalauflösung. Die Kavitation zwischen den Flächen 5 und 6 kann in diesem Falle - ebenso wie in den obigen Fällen - geschlossen sein, was von Vorteil sein kann, wenn das umgebende Gasmedium große Druckunterschiede annehmen kann. Die Gasviskosität ist bei normalem Luftdruck und normalen Temperaturen nicht besonders groß, was auf den genannten Umgebungsparametern beruht, jedoch kann in extremen Fällen eine Einstellung und Beeinflussung der Gasviskosität durch hermetische Einkapselung des Sensorkörpers erforderlich sein.

Die Erfindung kann im Rahmen des offenbarten allgemeinen Erfindungsgedanken in vielfacher Weise variiert werden.

0151957

Patentansprüche

1. Beschleunigungsmesser mit optischem oder elektrischem Ausgangssignal, welches die Beschleunigung eines Sensorkörpers (1) anzeigt, mit mindestens einem Massenelement (2) und mindestens einem elastischen Element (3), das an den Sensorkörper (1) angeschlossen ist, wobei das optische oder elektrische Ausgangssignal durch relative Bewegung des Massenelements (2) oder eines Teils desselben relativ zum Sensorkörper oder durch innere mechanische Dehnungen im Massenelement (2) und/oder des elastischen Elementes (3) erzeugt wird, d a d u r c h   g e k e n n z e i c h n e t, daß der Beschleunigungsmesser außerdem ein Dämpfungselement enthält, das aus einer gasgefüllten Kavitation (4) besteht, die von zwei im wesentlichen parallelen Flächen (5, 6) gebildet wird, von denen die eine Fläche von dem Massenelement (2) und die andere Fläche von dem Sensorkörper oder einem in starrer Verbindung mit dem Sensorkörper stehenden Teil gebildet wird, wobei die Form, die Größe und der Abstand der Flächen (5, 6) voneinander so bemessen sind, daß die Grundeigenschwingung des Massenelementes (2) und der elastischen Verbindung (3) im wesentlichen kritisch gedämpft wird.

2. Beschleunigungsmesser nach Anspruch 1, d a d u r c h g e k e n n z e i c h n e t, daß das Massenelement (2) und das elastische Element (3) von einem fest eingespannten Träger gebildet werden.

3. Beschleunigungsmesser nach Anspruch 1, d a d u r c h g e k e n n z e i c h n e t, daß die Bewegung des Massenelementes (2) oder eines an diesem fest angeschlossenen Teils durch Modulation von Licht erfaßt wird, daß in mindestens eine optische Faser (7) eingeleitet wird.

4. Beschleunigungsmesser nach einem der Ansprüche 1 oder 2, d a d u r c h   g e k e n n z e i c h n e t, daß die Bewegung des Massenelementes (2) oder eines an diesem fest angeschlossenen Teils durch Kapazitätsänderungen zwischen zwei elektrisch leitenden Flächen (40, 44) erfaßt wird.

5. Beschleunigungsmesser nach einem der vorhergehenden Ansprüche, d a d u r c h   g e k e n n z e i c h n e t, daß das Massenelement (2) oder das elastische Element (3) zumindest teilweise aus piezoelektrischen Material, wie z.B. $Pb(Zr_xTi_{1-x})O3$, aufgebaut ist.

6. Beschleunigungsmesser nach einem der vorhergehenden Ansprüche, d a d u r c h   g e k e n n z e i c h n e t, daß das in der Kavitation (4) enthaltene Gas gegenüber der Umgebung hermetisch abgeschlossen ist.

7. Beschleunigungsmesser nach einem der vorhergehenden Ansprüche, d a d u r c h   g e k e n n z e i c h n e t, daß das Massenelement (2) und das elastische Element (3) durch Integration eines Substratteils (20) und mindestens eines Schichtteils (21) aufgebaut sind.

8. Beschleunigungsmesser nach einem der vorhergehenden Ansprüche, d a d u r c h   g e k e n n z e i c h n e t, daß der Abstand zwischen den Flächen (5, 6) von der Dicke mindestens eines Distanzelementes (11,20) oder mindestens einer deponierten Schicht (42) definiert ist.

9. Beschleunigungsmesser nach einem der Ansprüche 1, 3 oder 4, d a d u r c h   g e k e n n z e i c h n e t, daß die erfaßte Bewegung durch mechanische Hebelwirkung eines aus dem Massenelement herausragenden Teils (12) verstärkt ist.

21 523 PE
0151957

10. Beschleunigungsmesser nach einem der vorhergehenden Ansprüche, d a d u r c h   g e k e n n z e i c h n e t, daß das Massenelement (2) und das elastische Element (3) längs eines gleichmäßig dicken Elementes (30 bis 34) verteilt sind.

11. Beschleunigungsmesser nach einem der vorhergehenden Ansprüche, d a d u r c h   g e k e n n z e i c h n e t, daß der Sensorteil 12 zumindest teilweise lichtreflektierend ist und derart relativ zu dem im Sensor befindlichen Faserelement (7) und Linsenelement (8) angeordnet ist, das geometrische Änderungen der Lage des Massenelementes Änderungen des in die Faser (7) zurückreflektierten Lichtes bewirken.

12. Beschleunigungsmesser nach einem der Ansprüche 1 bis 3 oder 6 bis 11, d a d u r c h   g e k e n n z e i c h n e t, daß die Kavitation (4) eine sog. Fabry-Perot-Kavitation ist, deren Flächen (5, 6) mit teilweise reflektierenden dünnen Schichten, z.B. Metallschichten, belegt sind.

FIG. 1

1/2

0151957

FIG. 2

FIG. 3A

FIG. 3B

FIG. 4

FIG. 5

FIG. 6